# EUROPÄISCHE PATENTSCHRIFT

(11) **EP 0 947 818 B1**
(45) Veröffentlichungstag und Bekanntmachung des Hinweises auf die Patenterteilung: **18.06.2008**
(21) Anmeldenummer: 99101648.6
(22) Anmeldetag: 05.02.1999
(51) Int. Cl.: G01M 17/007, G08G 1/04

(54) **Simulationsvorrichtung für Kraftfahrzeugunfälle und Verfahren zum Simulieren von Kraftfahrzeugunfällen**
Procedure and device for simulating car accidents
Procédé et dispositif de simulation d'accidents de véhicules

(30) Priorität: 02.04.1998 DE 19814844
(43) Veröffentlichungstag der Anmeldung: 06.10.1999
(73) Patentinhaber: Volkswagen Aktiengesellschaft, 38436 Wolfsburg (DE)
(72) Erfinder: Weiser, Florian, Dr., 38468 Ehra-Lessien (DE)

(56) Entgegenhaltungen:
- EP-A- 0 357 893
- EP-A- 0 445 671
- WO-A-98/05016

## Beschreibung

Die Erfindung betrifft eine Simulationsvorrichtung für Kraftfahrzeugunfälle mit einer Fahrbahn, auf der wenigstens ein Kraftfahrzeug auf einen Kollisionspunkt mit einem Hindernis oder einem anderen Kraftfahrzeug zubewegbar ist, gemäß dem Oberbegriff des Anspruchs 1. Die Erfindung betrifft ferner ein Verfahren zum Simulieren von Kraftfahrzeugunfällen, wobei auf einer Fahrbahn wenigstens ein Kraftfahrzeug auf einen Kollisionspunkt mit einem Hindernis oder einem anderen Kraftfahrzeug zubewegt wird, gemäß dem Oberbegriff des Anspruchs 10.

Aus der DE 40 06 433 A1 und der EP 0 445 671 A1 ist eine Vorrichtung und ein Verfahren zum Überprüfen von Wirkungen eines Kraftfahrzeugunfalls bekannt, bei dem wenigstens ein Kraftfahrzeug an einen vorher definierten Kollisionspunkt geführt wird. Das Kraftfahrzeug wird ferngesteuert gemäß vorgegebenen Bewegungsparametern geführt, wobei ein Speicher mit Soll-Werten für diese Bewegungsparameter vorgesehen ist. Ein Bordregler ist dabei mit Sensoren im Kraftfahrzeug verbunden und nimmt dadurch Ist-Werte der Bewegungsparameter auf. Das oder die Fahrzeuge werden an einem Leitkabel auf einem vorbestimmten Weg geführt. Dieses Leitkabel ist an oder in einer Fahrbahn angeordnet. Durch entsprechende Triggermarken am Leitkabel erfolgt eine Synchronisation von mehreren Fahrzeugen, welche auf einen gemeinsamen Kollisionspunkt zufahren und dort gleichzeitig ankommen sollen. Dieses System hat jedoch den Nachteil, daß die Komponenten zum Erfassen von Ist-Werten für Fahrzeuggeschwindigkeit und Fahrzeuglage kompliziert und aufwendig sind, da diese im Fahrzeug angeordnet und entsprechend crashfest auszubilden sind.

Die DE-OS 26 48 126 beschreibt eine Anordnung zur Geschwindigkeitssteuerung von gleislosen Fahrzeugen mittels eines Leitkabels. Dieses wird von einem tonfrequenten Wechselstrom durchflossen. Dieser Wechselstrom erzeugt ein Magnetfeld, welches wiederum in wenigstens zwei Spulen im Kraftfahrzeug von der seitlichen Abweichung des Fahrzeuges zum Leitkabel abhängige Spannungen erzeugt. Aus diesen Spannungen werden entsprechende Steuersignale für einen Lenkregler abgeleitet. Zusätzlich ist neben diesem Leitkabel ein zusätzliches Kabel angeordnet, welches von einem Strom mit einer gegenüber dem Strom im Leitkabel selektierbaren Messfrequenz durchflossen wird. Es ist eine Frequenzweiche für die mit der Messfrequenz induzierte Spannung vorgesehen, welche in einer Auswerteschaltung in Abhängigkeit vom Abstand zwischen den Kabeln die Fahrzeuggeschwindigkeit steuert. Auch bei diesem System sind wesentliche Teile der Ist-Wert-Erfassung für Geschwindigkeit und Lage des Kraftfahrzeuges in diesem selbst angeordnet, was einen Präparationsaufwand für einen Simulationslauf entsprechend erhöht.

Aus der DE-OS 26 48 945 ist eine Vorrichtung zur Geschwindigkeitssteuerung gleisloser Fahrzeuge mittels entlang der Fahrbahn angeordneten Marken bekannt, von denen jede ein Signal abgibt, sobald das Fahrzeug vorbeifährt. Diese Signale werden von einer entsprechenden Einrichtung im Fahrzeug selbst aufgenommen und entsprechend ausgewertet. Wiederum befinden sich die entsprechenden Einrichtungen für Geschwindigkeits- und Lageerfassung im Fahrzeug selbst.

Die DE-AS 21 52 752 lehrt längs neben der Fahrbahn Frequenzsignale abgebende Sollwertgeber für eine Fahrzeuggeschwindigkeit anzuordnen, welche von einem am Fahrzeug selbst angeordneten Empfänger ausgelesen werden. Eine Stellvorrichtung für den Fahrzeugantrieb regelt entsprechend dieser Frequenzsignale eine Fahrzeuggeschwindigkeit. Die jeweiligen mit den Soll-Slgnalen zu vergleichenden Ist-Werte für die Geschwindigkeit werden im Fahrzeug selbst ermittelt mit allen sich aus diesen in vorgenannter Weise ergebenden Nachteilen

Die EP 0 357 893 A2 betrifft ein Verfahren und eine Vorrichtung zum Messen eines Verkehrsflusses auf Straßen. Es sollen, unter Verwendung von vorhandenen Säulen Sensoren an Straßenrändern installlert werden, welche eine Fahrtrichtung, einen Fahrzeugtyp und/oder eine Geschwindigkeit eines vorbeifahrenden Fahrzeugs bestimmen. Entsprechende Sensoren können Schallsensoren, Magnetfeldsensoren, Hallsensoren oder Sensoren für elektromagnetische Wellen sein.

Der vorliegenden Erfindung liegt daher die Aufgabe zugrunde, eine gattungsgemäße Simulationsvorrichtung und ein entsprechendes Verfahren zum Bestimmen eines Geschwindigkeitsv,ektors bei einer Simulation eines Kraftfahrzeugunfalls bereitzustellen.

Diese Aufgabe wird erfindungsgemäß durch eine Simulationsvorrichtung der o.g. Art mit den in Anspruch 1 gekennzeichneten Merkmalen und durch ein Verfahren der o.g. Art mit den in Anspruch 10 gekennzeichneten Merkmalen gelöst. Vorteilhafte Ausgestaltungen der Erfindung sind in den abhängigen Ansprüchen angegeben.

Erfindungsgemäß ist eine Simulationsvorrichtung ausbildbar, welche mit Hilfe von entlang der Fahrbahn angeordnet Sensoren Reflexionen und/oder Unterbrechungen, des von den Sensoren ausgesendeten Signals, von dem auf der Fahrbahn befindlichen Kraftfahrzeug aufnimmt, wobei mit Hilfe einer Dopplerverschiebung der Reflexionen und/oder Unterbrechungen zu den jeweiligen Sensoren relative Geschwindigkeiten und Abstände des Kraftfahrzeugs bestimmbar sind, woraus eine momentane Lage und momentane Geschwindigkeit und einen Geschwindigkeitsvektor ermittelbar ist.

Das zugehörige erfindungsgemäße Verfahren zeichnet sich dadurch aus, dass zumindest einige Sensoren an benachbart zur Fahrbahn liegenden Positionen angeordnet werden, welche dazu ausgelegt sind, ein Signal auszusenden und Reflexionen und/oder Unterbrechungen eines Signals von dem auf der Fahrbahn befindlichen Kraftfahrzeug aufzunehmen, wodurch die relative Geschwindigkeiten und Abstände des Kraftfahrzeugs von den jeweiligen Sensoren mit Hilfe einer Dopplerverschiebung der Reflexionen und/oder der Unterbrechungen bestimmt werden können und eine momentanen Lage, eine momentanen Geschwindigkeit und einen Geschwindigkeitsvektors des Kraftfahrzeuges ermittelt werden kann.

Dies hat den Vorteil, daß sich für einen simulierten Unfall ein geringerer Präparationsaufwand am Kraftfahrzeug ergibt und gleichzeitig ebenfalls der Präparationsaufwand an der Simulationsvorrichtung selbst verringert ist, da die Sensoren nur einmal fest installiert werden und nicht crashfest ausgelegt sein müssen. Zusätzlich ist ein Schleppkabel am zu verunfallenden Kraftfahrzeug entbehrlich.

Eine vollständige und lückenlose Abtastung des Fahrbahnbereiches erzielt man dadurch, daß die Sensoren derart angeordnet sind, daß sich deren jeweilige Abtastbereiche wenigstens teilweise überschneiden.

Zusätzlich kann über eine Unterbrechung des Signals und/oder über eine Echolaufzeit der Reflexionen eine Entfernung des Kraftfahrzeugs vom Sensor und damit dessen Lage ermittelt werden.

Zweckmäßigerweise sind die von den Sensoren ausgesandten Signale Ultraschall und/oder elektromagnetische Wellen im sichtbaren Bereich und/oder Infrarotbereich und/oder Radarbereich.

Eine exakte und einfache Ortsbestimmung, ggf. als Triggerpunkt, erzielt man dadurch, daß die Sensoren wenigstens eine Lichtschranke aufweisen.

Zweckmäßigerweise ist wenigstens ein Sensor ein Laserscanner oder eine Videokamera.
Mittels eines Drucksensors ist beispielsweise ein durch das Überfahren in einer entsprechend gasgefüllten Vorrichtung erzeugter Druck erfaßbar.

In einer besonders bevorzugten Ausführungsform sind alle Sensoren mit einer Auswerteeinheit verbunden, welche von den Sensoren abgegebene Abtastsignale,aufnlmmt und zur Berechnung von Ist-Werten der Geschwindigkeit und der Lage des Kraftfahrzeuges auf der Fahrbahn auswertet. Hierbei weist die Auswerteeinheit zweckmäßigerweise eine Berechnungseinheit auf, welche beispielsweise zusätzlich aus den Ist-Werten unter Vergleich mit Soll-Werten entsprechende Regelsignale für Regeleinrichtungen im Kraftfahrzeug berechnet. Die Auswerteeinheit weist in besonders vorteilhafter Weise ferner eine Übertragungseinrichtung, insbesondere einen Funksender oder Infrarotsender, auf, welcher die Regelsignale an einen entsprechenden Empfänger im Kraftfahrzeug überträgt. Während der Bewegung des Kraftfahrzeugs auf der Fahrbahn werden Ist-Werte von dessen Geschwindigkeit und Lage von benachbart zur Fahrbahn liegenden Positionen aus bestimmt. Dies hat den Vorteil, daß sich für einen simulierten Unfall ein geringerer Präparationsaufwand am Kraftfahrzeug ergibt und gleichzeitig ebenfalls der Präparationsaufwand an der Simulationsvorrichtung selbst verringert ist, da die Sensoren nur einmal fest installiert werden und nicht crashfest ausgelegt sein müssen. Zusätzlich ist ein Schleppkabel am zu verunfallenden Kraftfahrzeug entbehrlich.

In einer bevorzugten Ausführungsform wird die Lage des Kraftfahrzeugs von wenigstens einem Sensor mittels eines Signalechoverfahrens, insbesondere mittel Ultraschall und/oder elektromagnetischen Wellen im sichtbaren Bereich, im Infrarotbereich und/oder im Radarbereich bestimmt.

Eine besonders einfache und betriebssicheres Verfahren erzielt man dadurch, daß die Lage des Kraftfahrzeugs von wenigstens einem Sensor mittels eines Signalunterbrechungsverfahrens, beispielsweise mittels einer Lichtschranke, bestimmt wird.

In einer besonders bevorzugten Ausführungsform wird die Lage des Kraftfahrzeugs von wenigstens einem Sensor In Form eines Laserscanners bestimmt

Zweckmäßigerweise werden von den Sensoren abgegebene Abtastsignale von einer Auswerteeinheit aufgenommen und zum Bestimmen von Ist-Werten für Geschwindigkeit und Lage des Kraftfahrzeuges ausgewertet.

Für eine genau vorbestimmte Führung des Kraftfahrzeugs auf der Fahrbahn bis zum Kollisionspunkt werden aus den Ist-Werten und einem Vergleich mit Soll-Werten von einer Berechnungseinheit entsprechende Regelsignale für Regeleinrichtungen im Kraftfahrzeug berechnet. Hierbei ist es besonders zweckmäßig, die Regelsignale drahtlos an das Kraftfahrzeug zu übertragen.

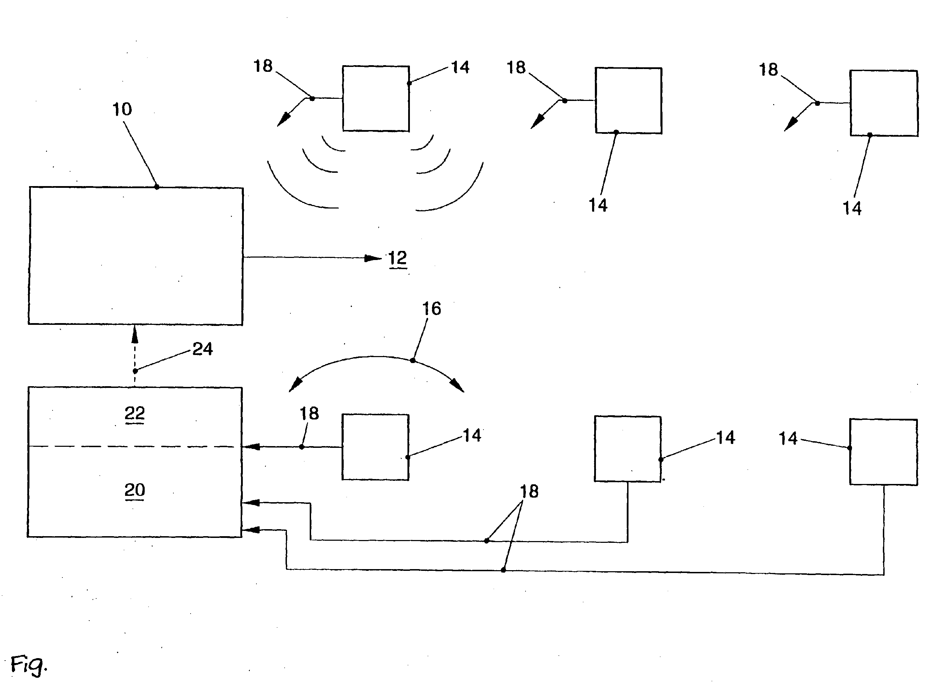

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt eine schematische Darstellung einer bevorzugten Ausführungsform einer erfindungsgemäßen Simulationsvorrichtung.

Ein Kraftfahrzeug 10 ist entlang einer Fahrbahn 12 auf einen nicht dargestellten Kollisionspunkt hin bewegbar. Beidseits der Fahrbahn sind Sensoren 14 angeordnet mit einem jeweiligen Erfassungsbereich 16. Bei der Bewegung des Fahrzeuges 10 entlang der Fahrbahn 12 tritt es nacheinander in die jeweiligen Erfassungsbereiche 16 der Sensoren 14 ein.

Jeder Sensor ist über eine Leitung 18 mit einer rechnergesteuerten Vorauswerteeinheit 20 verbunden. In dieser Vorauswerteeinheit 20 werden die Ist-Werte aus über Leitungen 18 eingegangenen Sensorabtastsignalen bestimmt und über einen Sender 22 und eine Funkstrecke 24 an das Fahrzeug 10 übermittelt. Diese Funkstrecke nutzt als Träger bevorzugt elektromagnetische Wellen, beispielsweise im Frequenzbereich Infrarot (IR) oder Ultrakurzwelle (UKW).

Das Fahrzeug 10 soll an dem Kollisionspunkt mit einem Hindernis oder einem andern Fahrzeug in vorbestimmter Weise kollidieren und wird daher auch als Crashfahrzeug 10 bezeichnet. Dazu wird von entsprechenden Regeleinrichtungen die Lage und die Geschwindigkeit des Fahrzeugs 10 geregelt. Hierfür sind beispielsweise im Fahrzeug SollWerte für Lage und Geschwindigkeit gespeichert. Diese müssen zum Errechnen von Regelsignalen für entsprechende Stellglieder mit momentanen Ist-Werten für Lage und Geschwindigkeit verglichen werden.

Diese Ist-Werte bestimmen außerhalb des Fahrzeugs 10 die stationär angeordneten Sensoren 14 beispielsweise mittels eines Echoauswertverfahrens. Hierbei senden die Sensoren ein Signal, wie beispielsweise eine Radarwelle, aus und nehmen ein Echosignal auf. Entweder die Sensoren 14 selbst oder die Vorauswerteinheit 22 bestimmen aus der Laufzeit des Echos eine Entfernung des Fahrzeuges 10 zum jeweiligen Sensor 14 und ggf. aus einer Dopplerverschiebung im Echosignal die Geschwindigkeit des Fahrzeugs 10 relativ zum jeweiligen Sensor. Aus allen Abständen und relativen Geschwindigkeiten zu jeweiligen Sensoren, in dessen Erfassungsbereich 16 sich das Fahrzeug 10 gerade befindet, ist eine momentane Lage und eine momentane Geschwindigkeit, ggf. auch ein Geschwindigkeitsvektor, für das Fahrzeug 10 ableitbar. Alternativ oder zusätzlich zur Dopplerverschiebung kann die Geschwindigkeit auch indirekt aus der Lageänderung über die Zeit ermittelt werden.

Die so ermittelten Ist-Werte werden den im Fahrzeug 10 befindlichen Regeleinrichtungen für Lage (Stellglied für Lenkung) und Geschwindigkeit (beispielsweise Stellglied für Drosselklappe einer Brennkraftmaschine) über die Funkstrecke 24 zugeführt.

Alternativ können die Regelsignale auch direkt in der Vorauswerteinheit 20 bestimmt werden, so daß über die Funkstrecke 24 direkt die Regelsignale für die jeweiligen Steilglieder übermittelt werden.

Die Sensoren müssen nicht für jeden Simulationslauf neu installiert werden, sondern sind fest angeordnet, so daß sie ständig und ohne Neuinstallation zur Verfügung stehen. Da sie unbeweglich stationär angeordnet sind, entfällt ein bei herkömmlichen Systemen erforderlicher hoher Wartungs- und Präparationsaufwand für diese Systeme zur Lage-/Geschwindigkeitserfassung.

### BEZUGSZEICHENLISTE

- 10: Kraftfahrzeug
- 12: Fahrbahn
- 14: Sensoren
- 16: Erfassungsbereich
- 18: Leitung
- 20: Vorauswerteinheit
- 22: Sender
- 24: Funkstrecke

## Patentansprüche

1. Simulationsvorrichtung für Kraftfahrzeugunfälle mit einer Fahrbahn (12), auf der wenigstens ein Kraftfahrzeug (10) auf einen Kollisionspunkt mit einem Hindernis oder einem anderen Kraftfahrzeug zubewegbar Ist, wobei entlang der Fahrbahn (12) stationär Sensoren (14) angeordnet sind, welche ein Signal aussenden und jeweils einen vorbestimmten Bereich (16) des Fahrbahnbereiches abtasten, um eine Lage des Kraftfahrzeuges (10) auf der Fahrbahn (12) zu erfassen,
**dadurch gekennzeichnet, daß**
die Sensoren (14) zusätzlich dazu ausgelegt sind, Reflexionen **und/oder Unterbrechungen**, des ausgesendeten Signals von dem auf der Fahrbahn (12) befindlichen Kraftfahrzeug (10) aufzunehmen und mit Hilfe einer Dopplerverschiebung der Reflexionen **und/oder Unterbrechungen zu den jeweiligen Sensoren (14) relative** Geschwindigkeiten und **Abstände** des Kraftfahrzeugs (10) **zu bestimmen, um daraus eine momentane Lage und momentane Geschwindigkeit und einen**
**Geschwindigkeitsvektor** zu ermitteln.

2. Simulationsvorrichtung nach Anspruch 1,
**dadurch gekennzeichnet, daß**
die Sensoren (14) derart angeordnet sind, daß sich deren jeweilige Abtastbereiche (16) wenigstens teilweise überschneiden.

3. Simulationsvorrichtung nach Anspruch 1 oder 2, '
**dadurch gekennzeichnet, daß**
die Sensoren (14) zum Erfassen der Lage des Kraftfahrzeuges (10) die Reflexionen und/oder Unterbrechungen dieses Signals von einem auf der Fahrbahn (12) befindlichen Kraftfahrzeug (10) aufnehmen.

4. Simulationsvorrichtung nach einem der vorhergehenden Ansprüche,
**dadurch gekennzeichnet, daß**
das Signal Ultraschall und/oder elektromagnetische Wellen im sichtbaren Bereich und/oder Infrarotbereich und/oder Radarbereich sind.

5. Simulationsvorrichtung nach einem der vorhergehenden Ansprüche,
**dadurch gekennzeichnet, daß**
die Sensoren (14) wenigstens eine Lichtschranke aufweisen.

6. Simulationsvorrichtung nach einem der vorhergehenden Ansprüche,
**dadurch gekennzeichnet, daß**
wenigstens ein Sensor (14) ein Laserscanner, ein Drucksensor oder eine Videokamera ist.

7. Simulationsvorrichtung nach einem der vorhergehenden Ansprüche,
**dadurch gekennzeichnet, daß**
alle Sensoren (14) mit einer Auswerteeinheit (20) verbunden sind, welche von den Sensoren (14) abgegebene Abtastsignale aufnimmt und zur Berechnung von Ist-Werten der Geschwindigkeit und der Lage des Kraftfahrzeuges (10) auf der Fahrbahn (10) auswertet.

8. Simulationsvorrichtung nach Anspruch 7,
**dadurch gekennzeichnet, daß**
die Auswerteeinheit (20) eine Berechnungseinheit aufweist, welche aus den Ist-Werten unter Vergleich mit Soll-Werten entsprechende Regelsignale für Regeleinrichtungen im Kraftfahrzeug (10) berechnet.

9. Simulationsvorrichtung nach Anspruch 7 oder 8,
**dadurch gekennzeichnet, daß**
die Auswerteeinheit (20) ferner eine Übertragungseinrichtung (22,24), insbesondere einen Funksender oder Infrarotsender, aufweist, welcher die Regelsignale an einen entsprechenden Empfänger im Kraftfahrzeug (10) überträgt.

10. Verfahren zum Simulieren von Kraftfahrzeugunfällen, wobei auf einer Fahrbahn wenigstens ein Kraftfahrzeug auf einen Kollisionspunkt mit einem Hindernis oder einem andern Kraftfahrzeug zubewegt wird, wobei während der Bewegung des Kraftfahrzeugs auf der Fahrbahn Ist-Werte von dessen Lage von fahrzeugexternen Sensoren aus bestimmt werden,
**gekennzeichnet durch**
• Anordnen zumindest einiger der Sensoren **(14)** an benachbart zur Fahrbahn liegenden Positionen, welche dazu ausgelegt sind, ein Signal auszusenden und Reflexionen **und/oder Unterbrechungen** eines Signals von dem auf der Fahrbahn (12) befindlichen Kraftfahrzeug (10) aufzunehmen, und
• Bestimmen der **relativen** Geschwindigkeit **und der Abstände** des Kraftfahrzeugs (10) **von den jeweiligen Sensoren (14)** mit Hilfe einer Dopplerverschiebung der Reflexionen **und/oder der Unterbrechungen, und**
• **Ermitteln einer momentanen Lage, einer momentanen Geschwindigkeit und eines Geschwindigkeitsvektors des Kraftfahrzeuges (10).**

11. Verfahren nach Anspruch 10,
**dadurch gekennzeichnet, daß**
die Lage des Kraftfahrzeugs von wenigstens einem Sensor mittels eines Signalechoverfahrens, insbesondere mittels Ultraschall und/oder elektromagnetischen Wellen im sichtbaren Bereich, im Infrarotbereich und/oder im Radarbereich bestimmt wird.

12. Verfahren nach Anspruch 10 oder 11,
**dadurch gekennzeichnet, daß**
die Lage des Kraftfahrzeugs von wenigstens einem Sensor mittels eines Signalunterbrechungsverfahrens, beispielsweise mittels einer Lichtschranke, bestimmt wird.

13. Verfahren nach einem der Ansprüche 10 bis 12,
**dadurch gekennzeichnet, daß**
die Lage des Kraftfahrzeugs von wenigstens einem Sensor in Form eines Laserscanners bestimmt wird.

14. Verfahren nach einem der Ansprüche 10 bis 13,
**dadurch gekennzeichnet, daß**
von den Sensoren abgegebene Abtastsignale von einer Auswerteeinheit aufgenommen und zum Bestimmen von Ist-Werten für Geschwindigkeit und Lage des Kraftfahrzeuges ausgewertet werden.

15. Verfahren nach einem der Ansprüche 10 bis 12,
**dadurch gekennzeichnet, daß**
aus den Ist-Werten und einem Vergleich mit Soll-Werten von einer Berechnungseinheit entsprechende Regelsignale für Regeleinrichtungen im Kraftfahrzeug berechnet werden.

16. Verfahren nach Anspruch 15,
**dadurch gekennzeichnet, daß**
die Regelsignale drahtlos an das Kraftfahrzeug übertragen werden.

## Claims

1. Simulation device for simulating motor vehicle accidents, having a carriageway (12) on which at least one motor vehicle (10) can be moved to a collision point with an obstacle or another motor vehicle, wherein sensors (14) are arranged in a fixed fashion along the carriageway (12), which sensors (14) emit a signal and each scan a predetermined area (16) of the carriageway area in order to sense a position of the motor vehicle (10) on the carriageway (12),
**characterized in that**
the sensors (14) are additionally configured to pick up reflections and/or interruptions of the emitted signal by the motor vehicle (10) which is located on the carriageway (12) and to determine relative speeds and distances of the motor vehicle (10) using a Doppler shift of the reflections and/or interruptions in relation to the respective sensors (14) in order to obtain therefrom an instantaneous position and instantaneous velocity and a velocity vector.

2. Simulation device according to Claim 1,
**characterized in that**
the sensors (14) are arranged in such a way that their respective scanning areas (16) at least partially overlap.

3. Simulation device according to Claim 1 or 2,
**characterized in that**
the sensors (14) for sensing the position of the motor vehicle (10) pick up the reflections and/or interruptions of this signal by a motor vehicle (10) which is located on the carriageway (12).

4. Simulation device according to one of the preceding claims,
**characterized in that**
the signal is ultrasonic and/or electromagnetic waves in the visible range and/or infrared range and/or radar range.

5. Simulation device according to one of the preceding claims,
**characterized in that**
the sensors (14) have at least one photoelectric barrier.

6. Simulation device according to one of the preceding claims,
**characterized in that**
at least one sensor (14) is a laser scanner, a pressure sensor or a video camera.

7. Simulation device according to one of the preceding claims,
**characterized in that**
all the sensors (14) are connected to an evaluation unit (20) which picks up scanning signals which are output by the sensors (14) and evaluates said scanning signals in order to calculate actual values of the velocity and the position of the motor vehicle (10) on the carriageway (12).

8. Simulation device according to Claim 7,
**characterized in that**
the evaluation unit (20) has a calculation unit which calculates on the basis of the actual values, by comparison with set point values, corresponding control signals for control devices in the motor vehicle (10).

9. Simulation device according to Claim 7 or 8,
**characterized in that**
the evaluation unit (20) also has a transmission device (22, 24), in particular a radio transmitter or infrared transmitter, which transmits the control signals to a corresponding receiver in the motor vehicle (10).

10. Method for simulating motor vehicle accidents, wherein on a carriageway at least one motor vehicle is moved to a collision point with an obstacle or another motor vehicle, wherein during the movement of the motor vehicle on the carriageway actual values for its position are determined from vehicle-external sensors,
**characterized by**
• arrangement of at least some of the sensors (14). at positions which are adjacent to the carriageway, which sensors (14) are configured to emit a signal and to pick up reflections and/or interruptions of a signal by the motor vehicle (10) which is located on the carriageway (12), and
• determination of the relative speed and the distances of the motor vehicle (10) from the respective sensors (14) using a Doppler shift of the reflections and/or interruptions, and
• identification of an instantaneous position, an instantaneous velocity and a velocity vector of the motor vehicle (10).

11. Method according to Claim 10,
**characterized in that**
the position of the motor vehicle is determined by at least one sensor by means of a signal echo method, in particular by means of ultrasonic sound and/or electromagnetic waves in the visible range, in the infrared range and/or in the radar range.

12. Method according to Claim 10 or 11,
**characterized in that**
the position of the motor vehicle is determined by at least one sensor by means of a signal interruption method, for example by means of a photoelectric barrier.

13. Method according to one of Claims 10 to 12,
**characterized in that**
the position of the motor vehicle is determined by at least one sensor in the form of a laser scanner.

14. Method according to one of Claims 10 to 13,
**characterized in that**
scanning signals which are emitted by the sensors are picked up by an evaluation unit and are evaluated in order to determine actual values for the speed and position of the motor vehicle.

15. Method according to one of Claims 10 to 12,
**characterized in that**
on the basis of the actual values and a comparison with set point values, a calculation unit calculates corresponding control signals for control devices in the motor vehicle.

16. Method according to Claim 15,
**characterized in that**
the control signals are transmitted to the motor vehicle in a wireless fashion.

## Revendications

1. Dispositif de simulation d'accidents de véhicules automobiles, qui présente une piste de déplacement (12) sur laquelle au moins un véhicule automobile (10) peut être déplacé en un point de collision avec un obstacle ou un autre véhicule automobile, des détecteurs stationnaires (14) qui émettent un signal et qui couvrent chacun une partie prédéfinie (16) de la zone occupée par la piste de déplacement pour détecter la position du véhicule automobile (10) sur la piste de déplacement (12) étant disposés le long de la piste de déplacement (12),
**caractérisé en ce que**
les détecteurs (14) sont de plus conçus pour enregistrer des réflexions et/ou des interruptions du signal émis par le véhicule (10) présent sur la piste de déplacement (12) et pour déterminer à l'aide du décalage Doppler des réflexions et/ou à l'aide des interruptions sur les différents détecteurs (14) les vitesses relatives et les distances du véhicule automobile (10), pour ainsi déterminer sa position instantanée et sa vitesse instantanée ainsi qu'un vecteur de vitesse.

2. Dispositif de simulation selon la revendication 1, **caractérisé en ce que** les détecteurs (14) sont disposés de telle sorte que leurs différentes zones de couverture (16) se recoupent au moins en partie.

3. Dispositif de simulation selon les revendications 1 ou 2, **caractérisé en ce que** pour détecter la position du véhicule automobile (10), le détecteur (14) enregistre les réflexions et/ou les interruptions de ce signal par un véhicule automobile (10) présent sur la piste de déplacement (12).

4. Dispositif de simulation selon l'une des revendications précédentes, **caractérisé en ce que** le signal est constitué d'ultrasons et/ou d'ondes électromagnétiques dans la plage visible, la plage infrarouge et/ou la plage radar.

5. Dispositif de simulation selon l'une des revendications précédentes, **caractérisé en ce que** les détecteurs (14) présentent au moins une barrière lumineuse.

6. Dispositif de simulation selon l'une des revendications précédentes, **caractérisé en ce qu'**au moins un détecteur (14) est un scanner laser, un détecteur de pression ou une caméra vidéo.

7. Dispositif de simulation selon l'une des revendications précédentes, **caractérisé en ce que** tous les détecteurs (14) sont reliés à une unité d'évaluation (20) qui enregistre les signaux de couverture délivrés par les détecteurs (14) et les évalue pour calculer des valeurs effectives de la vitesse et de la position du véhicule automobile (10) sur la piste de déplacement (12).

8. Dispositif de simulation selon la revendication 7, **caractérisé en ce que** l'unité d'évaluation (20) présente une unité de calcul qui calcule à partir des valeurs effectives et d'une comparaison à des valeurs de consigne des signaux de régulation qui conviennent à des dispositifs de régulation embarqués dans le véhicule (10).

9. Dispositif de simulation selon les revendications 7 ou 8, **caractérisé en ce que** l'unité d'évaluation (20) présente en outre un dispositif de transmission (22, 24) et en particulier un émetteur radio ou un émetteur infrarouge qui transmet les signaux de régulation à un récepteur approprié embarqué dans le véhicule (10).

10. Procédé de simulation d'accidents de véhicules automobiles, dans lequel au moins un véhicule automobile est amené sur une piste de déplacement en un point de collision qui présente un obstacle ou un autre véhicule automobile, et dans lequel, pendant le déplacement du véhicule automobile sur la piste de déplacement, des valeurs effectives de sa position sont déterminées à partir de détecteurs extérieurs au véhicule,
**caractérisé par** les étapes qui consistent à :
- disposer au moins certains des détecteurs (14) en des positions situées au voisinage de la piste de déplacement, lesquels détecteurs sont conçus pour émettre un signal et enregistrer des réflexions et/ou des interruptions d'un signal d'un véhicule (10) présent sur la piste de déplacement (12),
- déterminer la vitesse relative et les distances du véhicule (10) par rapport aux différents détecteurs (14) à l'aide du décalage Doppler des réflexions et/ou à l'aide des interruptions et
- déterminer la position instantanée, la vitesse instantanée et un vecteur de vitesse du véhicule (10).

11. Procédé selon la revendication 10, **caractérisé en ce que** la position du véhicule est déterminée par au moins un détecteur au moyen d'un procédé à écho du signal, en particulier au moyen d'ultrasons et/ou d'ondes électromagnétiques dans la plage visible, la plage infrarouge et/ou la plage radar.

12. Procédé selon les revendications 10 ou 11,
**caractérisé en ce que** la position du véhicule automobile est déterminée par au moins un détecteur au moyen d'un procédé à interruption du signal, par exemple au moyen d'une barrière lumineuse.

13. Procédé selon l'une des revendications 10 à 12, **caractérisé en ce que** la position du véhicule est déterminée par au moins un détecteur sous la forme d'un balayage laser.

14. Procédé selon l'une des revendications 10 à 13, **caractérisé en ce que** des signaux de couverture délivrés par les détecteurs sont enregistrés par une unité d'évaluation et sont évalués pour déterminer les valeurs effectives de la vitesse et de la position du véhicule automobile.

15. Procédé selon l'une des revendications 10 à 12, **caractérisé en ce que** des signaux de régulation qui conviennent à des dispositifs de régulation embarqués dans le véhicule sont calculés par une unité de calcul à partir des valeurs effectives et d'une comparaison à des valeurs de consigne.

16. Procédé selon la revendication 15, **caractérisé en ce que** les signaux de régulation sont transmis sans fil au véhicule automobile.
